## Europäisches Patentamt
## European Patent Office
## Office européen des brevets

(19)

(11) Numéro de publication: **0 051 507**
**A1**

(12)

# DEMANDE DE BREVET EUROPEEN

(21) Numéro de dépôt: **81401573.1**

(22) Date de dépôt: **09.10.81**

(51) Int. Cl.³: **G 02 B 7/26**

(30) Priorité: **31.10.80 FR 8023392**

(43) Date de publication de la demande:
**12.05.82 Bulletin 82/19**

(84) Etats contractants désignés:
**BE DE GB IT NL SE**

(71) Demandeur: **SOCAPEX**
**10 bis, quai Léon Blum**
**F-92153 Suresnes(FR)**

(72) Inventeur: **Collignon, Roger**
**THOMSON-CSF SCPI 173, bld Haussmann**
**F-75360 Paris Cedex 08(FR)**

(74) Mandataire: **Vesin, Jacques et al,**
**THOMSON-CSF SCPI 173, bld Haussmann**
**F-75360 Paris Cedex 08(FR)**

(54) **Dispositif de connexion et d'alignement de deux embouts de raccordement de fibres optiques, et connecteur mettant en oeuvre un tel dispositif.**

(57) L'invention concerne un dispositif de connexion et d'alignement de deux embouts de raccordement de fibre optique, chaque embout portant au moins un manchon de centrage contenant une fibre optique solidaire de celui-ci. Ce dispositif de connexion et d'alignement est constitué d'une embase (2) munie d'une cavité interne (3) dans laquelle est disposé un manchon d'alignement (4), pouvant recevoir les deux manchons de centrage (19,20), les dimensions extérieures (d) dudit manchon d'alignement étant inférieures à celles (D) de la cavité interne, autorisant un jeu transversal dudit manchon dans ladite cavité, le déplacement longitudinal du manchon d'alignement (4) étant limité par des butées (5, 6) disposées de part et d'autre et autorisant le passage desdits manchons de centrage (19,20).

Application: Connecteur de fibres optiques à embout "flottant".

EP 0 051 507 A1

FIG_2

DISPOSITIF DE CONNEXION ET D'ALIGNEMENT DE DEUX
EMBOUTS DE RACCORDEMENT DE FIBRES OPTIQUES
ET CONNECTEUR METTANT EN OEUVRE UN TEL DISPOSITIF

La présente invention concerne un dispositif de connexion et d'alignement de deux embouts de raccordement de fibres optiques, chaque embout portant au moins un manchon de centrage contenant une fibre optique solidaire de celui-ci, ledit manchon de centrage possédant à son extrémité antériaure une face de contact où débouche ladite fibre.

Elle concerne également des connecteurs de fibres optiques mettant en oeuvre des dispositifs tels que décrits ci-dessus.

De tels dispositifs de connexion et d'alignement de deux embouts de raccordement de fibres optiques sont connus, par exemple du brevet américain 4 160 580. Dans ce brevet, des embouts de forme sensiblement parallélépipédique sont connectés aux monofibres optiques, après dénudage de celles-ci, à l'aide d'une résine polymérisable qui fixe ladite fibre, placée dans une rainure appropriée, à l'embout correspondant. Afin de pouvoir raccorder deux embouts l'un à l'autre, il est prévu une barrette de raccordement pourvue de cavités ayant une forme ajustée à la forme extérieure des embouts précédemment décrits.

Une telle barrette de raccordement présente toutefois un certain nombre d'inconvénients. Chaque embout muni de sa fibre optique doit être introduit successivement dans la barrette afin d'assurer la connexion d'une ou plusieurs fibres les unes avec les autres. En effet, le raccordement simultané de plusieurs embouts dans la barrette n'est pas possible, à moins d'augmenter considérablement les tolérances de chaque cavité de la barrette, ce qui conduirait immanquablement à une atténuation importante des informations transmises du fait du mauvais alignement des fibres optiques entre elles.

Un autre inconvénient d'un tel système de raccordement est dû à la nécessité de tolérance extrèmement ser-

rée pour assurer une atténuation au niveau de la connexion restant dans des limites acceptables, c'est-à-dire $\ll$ 1dB. En effet, chaque fibre est fixée à l'embout avec précision, selon un axe prédéterminé. Par ailleurs, chaque embout a des cotes dont les tolérances doivent être extrèmement serrées, généralement $<$ 2 microns. De cette façon, on peut obtenir une connexion dont l'atténuation reste dans des limites acceptables.

Le dispositif de connexion et d'alignement selon l'invention permet d'éviter les inconvénients rencontrés dans l'art antérieur.

Dans ce but, ledit dispositif est caractérisé en ce qu'il est constitué d'une embase munie d'une cavité interne dans laquelle est disposé un manchon d'alignement pouvant recevoir les deux manchons de centrage, les dimensions extérieures dudit manchon d'alignement étant inférieures à celles de la cavité interne, autorisant un jeu transversal dudit manchon d'alignement dans ladite cavité, le déplacement longitudinal du manchon d'alignement étant limité par des butées disposées de part et d'autre et autorisant le passage desdits manchons de centrage.

Un tel dispositif présente en effet de nombreux avantages. Il consiste essentiellement à utiliser un manchon d'alignement pouvant se déplacer librement, dans certaines limites à l'intérieur d'une embase. De cette manière, lorsque le premier manchon de centrage contenant une fibre optique est amené au contact du manchon d'alignement, celui-ci prend la direction qui lui est imposée par ce premier manchon de centrage. Un tel alignement est parfaitement possible du fait de la mobilité du manchon d'alignement. Lorsqu'on connecte le deuxième manchon de centrage muni de sa fibre optique au manchon d'alignement maintenant solidaire du premier manchon de centrage, l'ensemble prend une position d'équilibre imposée par les deux manchons de centrage, le manchon d'alignement, libre de ses mouvements, prenant la position imposée par ceux-ci. Il est bien en-

3

tendu toutefois, que les manchons de centrage qui doivent être utilisés avec ce dispositif de connexion et d'alignement doivent eux-mêmes posséder un certain jeu transversal afin d'éviter les contraintes sur le manchon d'alignement.

De préférence, la cavité interne de l'embase et le manchon d'alignement seront de forme cylindrique. Dans ce cas, on a constaté qu'en pratique, l'angle de pivotement maximum du manchon par rapport à l'axe de symétrie de la cavité interne pouvait rester de préférence inférieur à 1°, cette limite permettant d'obtenir les résultats escomptés.

Afin de maintenir le manchon d'alignement à l'intérieur de la cavité, il est prévu des butées ayant de préférénce la forme d'un anneau dont la partie extérieure s'appuie sur la cavité interne et dont l'ouverture intérieure a un diamètre inférieur au diamètre extérieur du manchon d'alignement. Afin de faciliter la pénétration du manchon de centrage, cet anneau sera de préférence muni sur son bord extérieur d'un chanfrein. Ce manchon d'alignement pourra prendre différentes formes : lorsque les deux manchons de centrage ont le même diamètre, celui-ci sera simplement constitué d'un tube en matériau élastique muni d'une fente longitudinale et réalisant un serrage sur lesdits manchons de centrage lorsqu'ils sont introduits dans celui-ci. Ce manchon d'alignement pourra également revêtir la forme d'un cylindre muni d'une pluralité de mors de serrage longitudinaux, régulièrement répartis à sa périphérie. Un tel manchon d'alignement est par exemple décrit dans la demande de brevet français No. 80.06.613 au nom de la Demanderesse, incorporée ici à titre de référence.

De préférence, l'embase selon l'invention sera munie de moyens de préguidage qui, en coopération avec l'embout et son manchon de centrage, assureront un préalignement de ce dernier en direction du manchon d'alignement. Ces moyens de préguidage pourront par exemple être constitués par la partie cylindrique de l'embase s'étendant entre les butées du manchon d'alignement et l'extrémité de ladite embase. La longueur de cette partie cylindrique sera adaptée aux dimensions correspondantes de l'embout et du manchon de centrage afin de remplir sa fonction de préguidage.

L'invention concerne également des connecteurs de fibres optiques comportant, d'une part deux embouts de raccordement de fibre optique, chaque embout portant au moins un manchon de centrage contenant une fibre optique solidaire de celui-ci, ledit manchon de centrage possédant à son extrémité antérieure une face de contact où débouche ladite fibre, et d'autre part un dispositf de connexion et d'alignement des deux embouts tel que décrit ci-dessus.

De préférence, ledit connecteur sera tel que l'un au moins des embouts possède des moyens de positionnement longitudinal du manchon de centrage et des moyens de butées limitant le déplacement longitudinal dudit manchon de centrage. Ces moyens de positionnement longitudinal comporteront des moyens élastiques qui, après raccordement des deux embouts, permettent l'application d'une force d'appui entre les faces de contact respectives des manchons de centrage des deux embouts. Par exemple, ces moyens de positionnement longitudinal pourront être constitués par un ressort disposé coaxialement avec le manchon de centrage et s'appuyant d'une part, sur une collerette solidaire dudit manchon, et d'autre part, sur une bague solidaire de l'embout.

Les moyens de butées, qui limitent le déplacement longitudinal du manchon de centrage, seront par exemple constitués par un anneau, solidaire de l'embout, traversé par le manchon de centrage et contre lequel vient buter la collerette solidaire dudit manchon de centrage.

Afin de faciliter le raccordement et éviter les contraintes sur le manchon d'alignement, le connecteur selon l'invention est également caractérisé en ce que l'un au moins des manchons de centrage est monté dans l'embout avec un jeu latéral. Dans ce but, le diamètre interne de l'anneau sera supérieur au diamètre externe du manchon de centrage.

Selon un mode préférentiel de réalisation, le connecteur selon l'invention sera muni de moyens de positionnement angulaire. De préférence, ces moyens de positionnement angulaire seront constitués par un tenon porté par les manchons de centrage et coopérant avec une rainure longitudinale portée par l'embout. Ces moyens de positionnement angulaire présentent l'avantage suivant : lorsque la fibre est montée dans le manchon de centrage, on ne sait pas disposer celle-ci exactement selon l'axe du manchon. Au cours du montage, il existe toujours une erreur de centrage qui est toujours la même avec le même matériel de montage. Par conséquent, on placera toujours le tenon au même endroit (par exemple dans le plan vertical) et les erreurs de centrage seront ainsi automatiquement corrigées par alignement des deux tenons.

Selon une autre variante de l'invention, l'un des deux embouts possédera un manchon de centrage muni de moyens de positionnement et de moyens d'orientation dans ledit embout.

De préférence, ces moyens d'orientation du manchon de centrage dans l'embout, seront constitués par une rotule disposée entre les moyens de positionnement du manchon de centrage et l'extrémité postérieure de l'embout, permettant un pivotement du manchon à l'intérieur dudit embout. Cette rotule sera par exemple constituée par une gorge coopérant avec un joint torique logé dans celle-ci et s'appuyant sur le logement interne correspondant de l'embout.

Selon un mode préférentiel de réalisation, le joint torique sera élastique afin d'assurer l'étanchéité dudit embout.

Les moyens de positionnement, disposés entre la rotule et l'extrémité antérieure de l'embout, seront par exemple constitués par un disque muni d'un canal central, dont les surfaces de base extérieure et intérieure coopèrent respectivement avec des épaulements portés par l'embout du connecteur et le manchon de centrage qui y est logé, ledit disque étant fixé avec un jeu transversal dans l'embout tout en assurant le blocage en translation.

L'invention sera mieux comprise à l'aide des exemples de réalisation suivants illustrés par les figures qui représentent :

- la figure 1, un dispositif de connexion et d'alignement de deux embouts selon l'invention,
- la figure 2, un connecteur de fibres optiques muni d'un tel dispositif de connexion et d'alignement, dans lequel chaque manchon de centrage est muni de moyens de positionnement longitudinal en forme de ressort,
- la figure 3, un connecteur utilisant un dispositif de connexion et d'alignement selon l'invention dans lequel l'un des embouts est muni d'une rotule d'orientation.

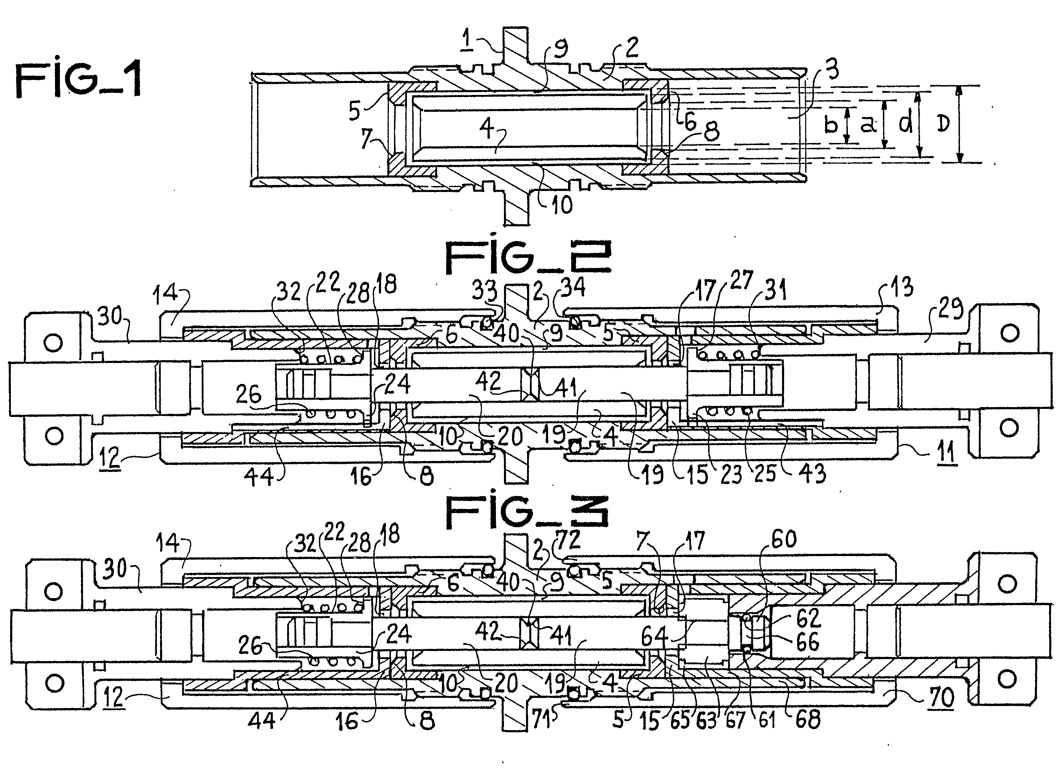

Sur la figure 1, est représenté un dispositif 1 de connexion et d'alignement de deux embouts de raccordement de fibres optiques. Ce dispositif 1 est constitué d'une embase 2 dans le logement interne 3 de laquelle est disposé un manchon d'alignement 4. Le diamètre D de la cavité 3 au niveau du manchon d'alignement 4 est supérieur au diamètre d extérieur dudit manchon d'alignement, autorisant un certain jeu de celui-ci à l'intérieur de celle-ci. Ce jeu est représenté par les espacements 9 et 10. Le déplacement longitudinal du manchon d'alignement 4 est limité de part et d'autre par les butées 5 et 6. Ces butées 5 et 6 auront de préférence la forme d'un anneau dont le bord extérieur est muni d'un chanfrein respectivement 7 et 8. La distance "a" séparant les butées 5 (qui représente le diamètre lorsque celle-ci a la forme d'un anneau) est inférieure au diamètre externe d du manchon d'alignement, mais supérieure au diamètre interne "b" dudit manchon. Ce diamètre b correspond au diamètre des manchons de centrage destinés à être accouplés dans le manchon 4.

La figure 2 représente une première variante de réalisation d'un connecteur utilisant un dispositf de connexion et d'alignement selon la figure 1. Sur cette figure, les mêmes éléments que ceux de la figure précédente portent les mêmes références. Chaque embout de raccordement respectivement 11 et 12 comporte un manchon de centrage 19,20 dans lequel est fixé une fibre optique non représentée sur la figure. A la partie antérieure du manchon de centrage 19,20, débouche la face de contact 40 de chacune des fibres, entourée respectivement d'un chanfrein 41,42, en forme de cône de révolution. Chaque manchon de centrage 19,20 peut se déplacer longitudinalement dans l'embout correspondant 11,12. Un ressort 25,26, disposé entre une collerette 27,28 solidaire de chaque manchon 19,20, et une bague 31,32, solidaire de l'embout, place le manchon 19,20 en position avancée. Un ergot 23,24, solidaire de la collerette 27,28 et du manchon 19,20, coopère avec une rainure 43,44, solidaire de l'embout 11,12 et fixe de façon définitive l'orientation angulaire de ce manchon de centrage dans l'embout. L'ouverture 17,18 de l'embout à travers laquelle passe le manchon de centrage 19,20 est de diamètre légèrement supérieur à celui-ci. Ceci permet un jeu latéral dudit manchon au cours de l'opération d'accouplement (déplacement vertical sur la figure). Cette ouverture 17,18 est de diamètre inférieur au diamètre de la collerette 27,28, servant ainsi de butée à celle-ci.

Chaque embout 11,12, décrit ci-dessus, possède donc la propriété de permettre un déplacement à la fois longitudinal et latéral du manchon de centrage 19,20, ce qui permet d'éviter les contraintes entre le manchon d'alignement 4 et les manchons de centrage 19,20 au moment de l'accouplement. Ainsi que cela est représenté sur la figure, chaque embout peut également être muni d'un joint d'étanchéité 33, 34.

L'accouplement des deux embouts à l'aide du dispositif de connexion et d'alignement 1 selon l'invention s'effectue de la manière suivante : on procède tout d'abord à la connexion d'un embout de centrage dans le dispositif de connexion et d'alignement. Cet embout de centrage est monté "flottant" ainsi qu'on l'a vu précédemment, c'est à-dire possédant un certain jeu transversal (vertical sur la figure). Ledit embout, du fait de son chanfrein et de celui de l'anneau jouant le rôle de butée pour le manchon d'alignement 4, pénètre sans difficulté dans celui-ci et prend une position quelconque, intermédiaire, non définitive. Cette position peut être modifiée en contrariant l'opposition du ressort 25,26. Par conséquent, la première insertion d'un manchon de centrage communique une direction au manchon d'alignement, l'axe des deux manchons étant désormais confondu. L'axe commun des deux manchons peut être également modifié, dans la limite du jeu du manchon d'alignement, en contrariant la force exercée par le ressort sur le manchon de centrage. Par conséquent, l'insertion du deuxième manchon de centrage s'effectue sans difficulté : la présence des chanfreins cités précédemment permet l'introduction du deuxième manchon de centrage dans le manchon d'alignement, tandis que le jeu possible du premier manchon de centrage ainsi que du deuxième manchon de centrage permet l'alignement de ces deux manchons par l'intermédiaire du manchon d'alignement, sans qu'il se créé de contraintes sur ledit manchon d'alignement. En fin d'insertion, l'action des deux ressorts communique une pression de contact à l'extrémité des manchons de centrage au point de contact 40 ce qui améliore, bien entendu, la connexion optique.

D'une manière générale, le jeu du manchon d'alignement dans la cavité interne de l'embase dépend de la forme de la partie antérieure du manchon de centrage ainsi que de celle de la face d'entrée du manchon d'alignement. Si le manchon de centrage, ainsi que l'anneau de butée du manchon d'alignement, ne possédaient pas de chanfrein, aucun jeu ne pourrait alors être toléré. Ceci n'est pas la solution re-

9

cherchée par l'invention qui cherche au contraire à s'affranchir des problèmes de tolérances serrées.

Inversement, si le manchon de centrage est très pointu, le manchon d'alignement peut avoir un jeu important. D'une façon générale, plus le chanfrein des deux éléments cités ci-dessus est important, plus le jeu peut être important. Avec ces indications, l'homme de l'art déterminera par de simples manipulations de routine, le jeu nécessaire au manchon d'alignement permettant au manchon de centrage de s'insérer dans tous les cas.

Les moyens élastiques permettant un jeu longitudinal des manchons de centrage, tel que par exemple les ressorts 25 et 26, exerceront une force d'appui suffisante pour éviter à l'ensemble des manchons de centrage et d'alignement de se déplacer du seul fait du poids de l'ensemble après la première connexion. Mais par ailleurs, lorsque l'on connecte le deuxième manchon de centrage, il faut que celui-ci puisse déplacer le premier manchon de centrage pour lui imposer un axe d'alignement avec lui-même. Par conséquent, le ressort ne doit pas avoir une force d'appui trop importante pour s'opposer à ce mouvement, et créer ainsi des contraintes sur les manchons d'alignement.

La figure 3 représente une deuxième variante d'un connecteur utilisant un dispositif de connexion et d'alignement selon l'invention, variante dans laquelle l'un des embouts possède un manchon de centrage muni d'une rotule d'orientation.

Sur cette figure, les mêmes éléments que ceux des figures précédentes portent les mêmes références. La partie gauche de la figure correspond à un embout tel que décrit sur la figure 2 et la partie centrale à l'embase décrite sur la figure 1. La partie droite de cette figure 3 comporte un embout dans lequel le manchon de centrage est muni d'une rotule de pivotement.

Une mono-fibre optique, munie de sa gaine de protection, non représentée sur la figure, est fixée ainsi que cela a été décrit précédemment dans le manchon de centrage 19. Celui-ci est fixé dans l'embout 70 par un disque 63 fixé en 64 au manchon 19, ce disque possédant sur ses faces extérieures un certain jeu 65 à l'intérieur de la partie correspondante 67 de l'embout. Cette partie 67 est munie d'épaulements 15 qui maintiennent longitudinalement l'embout de centrage 19. Cet embout de centrage 19 se termine par une partie 60 en forme de rotule, celle-ci étant constituée d'une part, par une gorge circulaire 62 et d'autre part, par un joint torique 61. Lorsque ce joint est élastique, l'embout 70 possède la propriété d'être étanche en position déconnectée, évitant les remontées de liquide dans la gaine de la fibre optique. Le manchon de centrage 19 peut donc pivoter approximativement autour du point 66 représentant le centre du joint torique 61. L'angle de pivotement dudit manchon de centrage 19 est contrôlé par le jeu 65 du disque 63. Cet angle sera généralement $\leqslant$ 1° dans toutes les directions. L'épaulement 15, qui limite le jeu transversal du disque 63, est également muni d'un jeu 17 autorisant le déplacement du manchon de centrage dans les limites ci-dessus. La face extérieure de cet épaulement vient s'appuyer contre la butée en forme d'anneau 5.

Le raccordement des deux embouts et l'alignement à l'aide du dispositif 1 s'effectue de la façon suivante : on commence généralement par connecter l'embout 70 au dispositif de connexion et d'alignement 1. En effet, la rotule ne permettant qu'un pivotement autour d'un point 66, il est préférable d'assurer l'orientation du manchon d'alignement 4 à l'aide du manchon de centrage 19 puisque le manchon de centrage 20 peut dans une certaine limite se déplacer latéralement (verticalement sur la figure). L'extrémité 68 de l'embase 2, en forme de cylindre creux, permet un préguidage de l'embout 70 : cette partie 68 s'insère tout d'abord entre les deux extrémités 71 et 72 de l'embout 70, puis vient s'appuyer sur la partie 67 dudit embout. Le manchon de centrage 19 est à ce moment-là en regard du chanfrein 7 de l'anneau de butée 5. La pénétration à l'intérieur de cet anneau s'effectue sans difficulté tandis que le chanfrein 41 dudit embout de centrage 19 permet une pénétration aisée dans le manchon d'alignement 4. Les manchons 19 et 4 ont alors le même axe d'alignement imposé par le manchon de centrage 19.

De la même manière que ci-dessus, le manchon de centrage 20 pénètre sans difficulté dans le manchon d'alignement 4, étant donnée la possibilité de jeu longitudinal et latéral dont est muni ledit manchon de centrage 20. Les deux faces antérieures des manchons de centrage 19 et 20 viennent au contact l'une de l'autre en 40, le ressort 26 assurant une force d'application suffisante des deux manchons l'un sur l'autre afin de permettre un bon contact optique.

REVENDICATIONS

1. Dispositif de connexion et d'alignement (1) de deux embouts (11,12) de raccordement de fibre optique, chaque embout (11,12) portant au moins un manchon de centrage (19,20) contenant une fibre optique solidaire de celui-ci, ledit manchon de centrage (19,20) possédant à son extrémité antérieure une face de contact (40) où débouche ladite fibre, caractérisé en ce qu'il est constitué d'une embase (2) munie d'une cavité interne (3) dans laquelle est disposé un manchon d'alignement (4), pouvant recevoir les deux manchons de centrage (19,20), les dimensions extérieures (d) dudit manchon d'alignement étant inférieures à celles (D) de la cavité interne, autorisant un jeu transversal dudit manchon dans ladite cavité, le déplacement longitudinal du manchon d'alignement (4) étant limité par des butées (5,6) disposées de part et d'autre et autorisant le passage desdits manchons de centrage (19,20).

2. Dispositif selon la revendication 1, caractérisé en ce que la cavité interne (3) de l'embase (2) et le manchon d'alignement (4) sont de forme cylindrique.

3. Dispositif selon la revendication 2, caractérisé en ce que l'angle de pivotement maximum du manchon (4) par rapport à l'axe de symétrie de la cavité interne (3) est $\leqslant 1°$.

4. Dispositif selon l'une des revendications 1 à 3, caractérisé en ce que les butées (5,6) ont la forme d'un anneau dont la partie extérieure s'appuie sur la cavité interne (3) et dont l'ouverture intérieure a un diamètre (a) inférieur au diamètre extérieur (d) du manchon d'alignement (4).

5. Dispositif selon la revendication 4, caractérisé en ce que l'anneau est muni sur son bord extérieur d'un chanfrein (8).

6. Dispositif selon l'une des revendications 1 à 5, caractérisé en ce que le manchon d'alignement (4) est muni d'une pluralité de mors de serrage longitudinaux, régulièrement répartis à sa périphérie.

7. Dispositif selon l'une des revendications 1 à 6, caractérisé en ce que l'embase (2) possède·des moyens de préguidage (68) des embouts (19,20).

8. Connecteur de fibres optiques comportant, d'une part, deux embouts (11,12) de raccordement de fibre optique, chaque embout (11,12) portant au moins un manchon de centrage (19,20) contenant une fibre optique solidaire de celui-ci, ledit manchon de centrage (19,20) possédant à son extrémité antérieure une face de contact (40) où débouche ladite fibre, et d'autre part, un dispositif de connexion et d'alignement (1) des deux embouts, caractérisé en ce que le dispositif de connexion et d'alignement est conforme à l'une des revendications précédentes.

9. Connecteur selon la revendication 8, caractérisé en ce que l'un au moins des embouts possède des moyens de positionnement longitudinal (25,26) du manchon de centrage (19,20) et des moyens de butées (15,16) limitant le déplacement longitudinal dudit manchon de centrage (19,20).

10. Connecteur selon la revendication 9, caractérisé en ce que les moyens de positionnement longitudinal (25,26) comportent des moyens élastiques qui, après raccordement des deux embouts, permettent l'application d'une force d'appui entre les faces de contact respectives des manchons de centrage des deux embouts.

11. Connecteur selon la revendication 8, caractérisé en ce que l'un au moins des manchons de centrage (19,20) est muni d'un ressort (25,26) disposé coaxialement avec lui et s'appuyant d'une part, sur une collerette (27,28) solidaire dudit manchon, et d'autre part, sur une bague (31,32) solidaire de l'embout, permettant un déplacement longitudinal du manchon de centrage dans l'embout.

12. Connecteur selon la revendication 9 ou 10, carac-

térisé en ce que les moyens de butées sont constituées par un anneau (15,16), solidaire de l'embout, traversé par le manchon de centrage (19,20) et contre lequel vient buter une collerette (27,28) solidaire du manchon de centrage (19,20).

13. Connecteur selon l'une des revendications 8 à 12, caractérisé en ce que chaque manchon de centrage (19,20) est monté dans l'embout avec un jeu latéral.

14. Connecteur selon la revendication 12, caractérisé en ce que le diamètre interne de l'anneau (15,16) est supérieur au diamètre externe du manchon de centrage (19,20), autorisant ainsi un jeu transversal du manchon de centrage dans l'embout.

15. Connecteur selon l'une des revendications 8 à 14, caractérisé en ce que les manchons de centrage (19,20) des deux embouts sont munis de moyens de positionnement angulaire.

16. Connecteur selon la revendication 15, caractérisé en ce que les moyens de positionnement angulaire (23,24) sont constitués par un tenon (23,24) porté par le manchon de centrage (19,20) et coopérant avec une rainure longitudinale (43,44) portée par l'embout.

17. Connecteur selon l'une des revendications 8 à 16, caractérisé en ce que l'un des embouts (70) possède un manchon de centrage (15) muni de moyens de positionnement et de moyens d'orientation dans l'embout (70).

18. Connecteur selon la revendication 17, caractérisé en ce que les moyens d'orientation du manchon de centrage (19) dans l'embout (70) sont constitués par une rotule disposée entre les moyens de positionnement du manchon de centrage et l'extrémité postérieure de l'embout, permettant un pivotement du manchon à l'intérieur dudit embout.

19. Connecteur selon la revendication 18, caractérisé en ce que la rotule est constituée par une gorge (62) coopérant avec un joint torique (61) logé dans celle-ci et s'appuyant sur le logement interne correspondant de l'embout (70).

20. Connecteur selon l'une des revendications 18 ou 19, caractérisé en ce que le joint torique (61) est élastique et assure l'étanchéité de l'embout.

21. Connecteur selon l'une des revendications 18 à 20, caractérisé en ce que les moyens de positionnement, disposés entre la rotule et l'extrémité antérieure de l'embout, sont constitués par un disque (63) muni d'un canal central dont les surfaces de base extérieure et intérieure coopèrent respectivement avec des épaulements (15) portés par l'embout du connecteur et le manchon de centrage qui y est logé, ledit disque (63) étant fixé avec un jeu transversal dans l'embout tout en assurant le blocage en translation.

FIG_1

FIG_2

FIG_3

Office européen
des brevets

Numéro de la demande

EP 81 40 1573

**RAPPORT DE RECHERCHE EUROPEENNE**

| DOCUMENTS CONSIDERES COMME PERTINENTS | | | CLASSEMENT DE LA DEMANDE (Int. Cl. ³) |
|---|---|---|---|
| Catégorie | Citation du document avec indication, en cas de besoin, des parties pertinentes | Revendication concernée | |
| | Comptes-rendus de "L'INTERNATIONAL CONFERENCE ON INTEGRATED OPTICS AND OPTICAL FIBER COMMUNICATION, tenu de 18-20 juillet 1977 à Tokyo (JP) N. SUZUKI et al.: "A new demountable connector developed for a trial optical transmission system", pages 351-354. <br><br> * page 351 et figure 2 * <br><br> -- <br><br> FR - A - 2 379 079 (SOCIETE NOUVELLE DE CONNEXION) <br><br> * revendications 1-6 et figure 1 * <br><br> & BE - A - 862 678 <br> & DE - A - 2 803 670 <br> & GB - A - 1 557 532 <br> & NL - A - 78 00 332 <br><br> -- <br><br> FR - A - 2 408 152 (BUNKER RAMO) <br><br> * page 8, figures 1,4 * <br><br> ------ | <br><br><br><br><br><br><br><br>1-3,8-11 <br><br><br><br><br><br>1,2,9,13,19,20 <br><br><br><br><br><br><br><br><br><br>1,6 | G 02 B 7/26 <br><br><br><br><br><br> **DOMAINES TECHNIQUES RECHERCHES (Int. Cl. ³)** <br><br> G 02 B 7/26 <br><br><br><br><br><br><br><br><br><br> **CATEGORIE DES DOCUMENTS CITES** <br><br> X: particulièrement pertinent à lui seul <br> Y: particulièrement pertinent en combinaison avec un autre document de la même catégorie <br> A: arrière-plan technologique <br> O: divulgation non-écrite <br> P: document intercalaire <br> T: théorie ou principe à la base de l'invention <br> E: document de brevet antérieur, mais publié à la date de dépôt ou après cette date <br> D: cité dans la demande <br> L: cité pour d'autres raisons <br><br> &: membre de la même famille, document correspondant |

Le présent rapport de recherche a été établi pour toutes les revendications

| Lieu de la recherche | Date d'achèvement de la recherche | Examinateur |
|---|---|---|
| La Haye | 13.01.1982 | MALIC |

OEB Form 1503.1 06.78